Europäisches Patentamt

European Patent Office

Office européen des brevets

(19)

(11) Veröffentlichungsnummer: **0 094 070**
**B1**

(12) **EUROPÄISCHE PATENTSCHRIFT**

(45) Veröffentlichungstag der Patentschrift:
**14.08.85**

(21) Anmeldenummer: **83104520.8**

(22) Anmeldetag: **07.05.83**

(51) Int. Cl.⁴: **B 23 B 29/034,** B 28 D 1/14

(54) **Bohrwerkzeug.**

(30) Priorität: **12.05.82 DE 8213668 U**

(43) Veröffentlichungstag der Anmeldung:
**16.11.83 Patentblatt 83/46**

(45) Bekanntmachung des Hinweises auf die Patenterteilung:
**14.08.85 Patentblatt 85/33**

(84) Benannte Vertragsstaaten:
**DE**

(56) Entgegenhaltungen:
**DE - A - 2 549 057**
**DE - A - 3 014 388**
**DE - B - 2 331 467**
**FR - A - 2 234 079**

(73) Patentinhaber: **Hawera Probst GmbH + Co.,**
**Schützenstrasse 77, D-7980 Ravensburg (DE)**

(72) Erfinder: **Peetz, Wolfgang, Dipl.-Ing., Im Kalkofen 51,**
**D-7981 Blitzenreute (DE)**
Erfinder: **Moser, Bernhard, Ulrichstrasse 31,**
**D-7963 Altshausen (DE)**
Erfinder: **Haussmann, August, Gebhard Fugelstrasse 17,**
**D-7980 Ravensburg-Oberzell (DE)**

(74) Vertreter: **Jackisch, Walter, Dipl.-Ing., Menzelstrasse 40,**
**D-7000 Stuttgart 1 (DE)**

ACTORUM AG

## Beschreibung

Die Erfindung betrifft ein Bohrwerkzeug zur Herstellung von hinterschnittenen Bohrungen nach dem Oberbegriff des Anspruches 1.

Zur Herstellung der Hinterschneidungen in Bohrungen wird das Bohrwerkzeug entweder in eine vorgefertigte zylindrische Bohrung eingeführt oder mit dem Bohrer des Bohrwerkzeuges diese zylindrische Bohrung hergestellt. Anschliessend wird der Bohrer mittels Abstützteiles auf der Schwenkführung verschwenkt, so dass der Bohrer schräg in der Bohrung liegt. Anschliessend wird der Bohrer kreisend bewegt, wobei er am Schwenklager abgestützt wird. Bei dieser kreisenden, umlaufenden Bewegung wird die Hinterschneidung in der Bohrung hergestellt. Anschliessend muss der Bohrer wieder aus der Bohrung herausgezogen werden. Hierzu ist es erforderlich, den Bohrer in seine zentrische Ausgangslage zurückzubringen, damit er herausgezogen werden kann. In der Praxis ist es üblich, den Bohrer rotierend in die Bohrung ein- und auszufahren. Dabei besteht die Gefahr, dass der Bohrer nicht exakt zentrisch zurückgezogen wird, so dass der rotierende Bohrkopf die soeben hergestellte Hinterschneidung beim Zurückziehen beschädigt oder unbrauchbar macht. Auch beim Einfahren des Bohrers kann die vorgefertigte Bohrung ungewollt nachgefräst werden, wenn er nicht exakt zentrisch und axial in die Bohrung geschoben wird.

Der Erfindung liegt die Aufgabe zugrunde, das gattungsgemässe Bohrwerkzeug so auszubilden, dass es genau zentrisch in die Bohrung eingefahren und aus ihr herausgezogen werden kann.

Diese Aufgabe wird erfindungsgemäss mit den kennzeichnenden Merkmalen des Anspruches 1 gelöst.

Bei dem erfindungsgemässen Bohrwerkzeug verhindert das Zentriersicherungsteil, dass der Bohrer im Bohrloch ungewollt in eine ausserzentrische Lage gelangt. Das Zentriersicherungsteil liegt in seiner Sicherungsstellung an der Anschlagfläche an, so dass eine Radialbewegung des Bohrers in bezug auf die Führungshülse nicht möglich ist. Der Bohrer lässt sich dadurch exakt zentrisch in das Bohrloch einschieben und aus ihm herausziehen. Nach dem Einschieben des Bohrers in die Bohrung wird das Zentriersicherungsteil in seine Freigabestellung bewegt, in der es mit seiner Anlagefläche von der Anschlagfläche freikommt. Dadurch kann der Bohrer nunmehr in der Bohrung verschwenkt werden, so dass durch die anschliessende kreisende, umlaufende Bewegung des Bohrers die Hinterschneidung im Bohrloch hergestellt werden kann.

Weitere bevorzugte Merkmale der Erfindung ergeben sich aus den weiteren Ansprüchen, der Beschreibung und den Zeichnungen.

Die Erfindung wird anhand dreier in den Zeichnungen dargestellter Ausführungsbeispiele näher erläutert.

Es zeigen:

Fig. 1 teilweise in Ansicht und teilweise im Axialschnitt eine erste Ausführungsform eines erfindungsgemässen Bohrwerkzeuges, dessen Bohrer durch ein Sicherungsteil zentriert ist,

Fig. 2 das Bohrwerkzeug gemäss Fig. 1, dessen Sicherungsteil in die Freigabestellung bewegt und dessen Bohrer innerhalb der Bohrung verschwenkt worden ist,

Fig. 3 den oberen Teil einer zweiten Ausführungsform eines erfindungsgemässen Bohrwerkzeuges, dessen Sicherungsteil sich in Sicherungsstellung befindet,

Fig. 4 das Bohrwerkzeug gemäss Fig. 3, dessen Sicherungsteil die Freigabestellung einnimmt,

Fig. 5 und 6 in Darstellungen entsprechend den Fig. 3 und 4 ein drittes Ausführungsbeispiel eines erfindungsgemässen Bohrwerkzeuges.

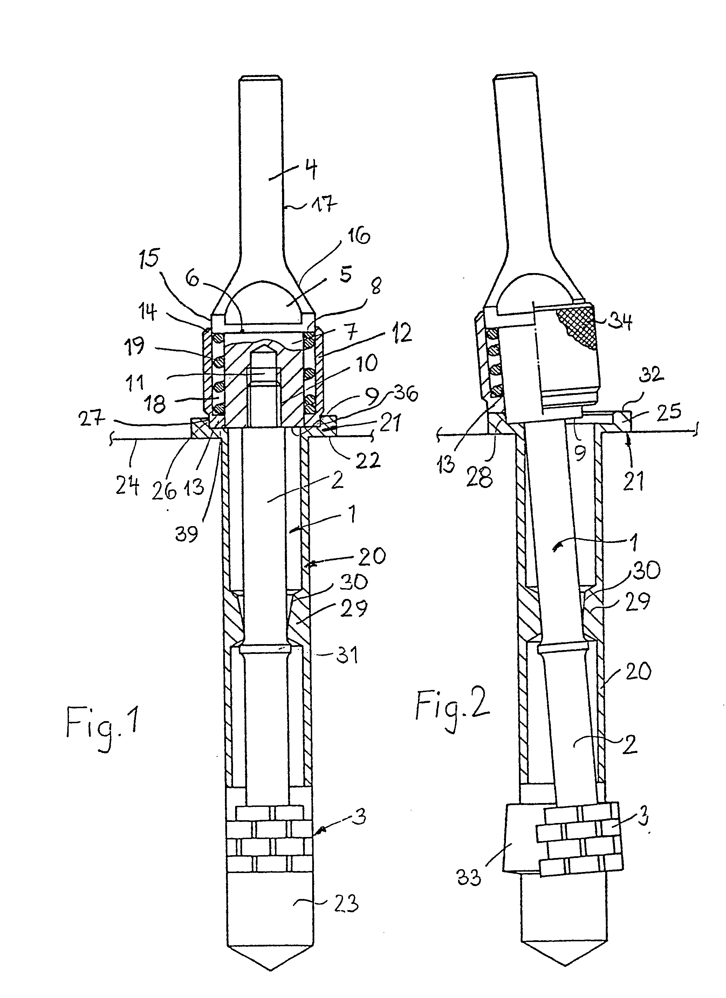

Das Bohrwerkzeug gemäss den Fig. 1 und 2 hat einen Bohrer 1 mit einem Bohrerschaft 2, an dessen freiem Ende ein Bohrkopf 3 vorgesehen ist. Der Bohrer 1 ist ausserdem mit einem Anschlussteil 4 versehen, mit dem der Bohrer an eine (nicht dargestellte) Antriebsmaschine angeschlossen werden kann.

Im Ausführungsbeispiel sind das Anschlussteil 4 und der Bohrerschaft 2 zweiteilig ausgebildet. Das Anschlussteil 4 geht in ein im Durchmesser grösseres Übergangsstück 5 über, das an seiner Stirnseite 6 ein zylindrisches Befestigungsteil 7 aufweist. Das Übergangsstück 5 ragt mit seiner Stirnseite 6 radial über das Befestigungsteil 7, so dass eine radial über das Befestigungsteil ragende, umlaufende Schulterfläche 8 gebildet wird. Das Befestigungsteil 7 ist an seiner Stirnseite 9 mit einer Gewindebohrung 10 zur Aufnahme eines Gewindezapfens 11 an der Stirnseite des Bohrerschaftes 2 versehen. Der Bohrerschaft 2 hat kleineren Durchmesser als das Befestigungsteil 7.

Auf dem Befestigungsteil 7 ist ein im wesentlichen zylindrisches Sicherungsteil 12 axial verschiebbar gelagert. Das Sicherungsteil 12 hat an seinem dem Bohrerschaft 2 zugewandten Ende einen radial nach innen ragenden Flansch 13, der am Befestigungsteil 7 anliegt. Das Sicherungsteil 12 ragt über die gesamte axiale Länge des Befestigungsteiles 7 und liegt mit seinem oberen Ende 14 über den gesamten Umfang an der Aussenseite des Übergangsstückes 5 an. Das Übergangsstück 5 hat zur sicheren Axialführung des Sicherungsteiles 12 eine an die Stirnseite 6 anschliessende zylindrische Mantelfläche 15, die ausreichend axiale Länge hat, um ein verkantungsfreies Verschieben des Sicherungsteiles 12 zu gewährleisten. Die zylindrische Mantelfläche 15 geht über eine auf einem Kegelmantel liegende Zwischenfläche 16 in eine zylindrische Mantelfläche 17 des Anschlussteiles 4 über. Der Durchmesser des Anschlussteiles 4 ist wesentlich kleiner als der Durchmesser des Befestigungsteiles 7 und des die Mantelfläche 15 aufweisenden Abschnittes des Übergangsstückes 5.

Das Befestigungsteil 7 und das es mit Abstand umgebende Sicherungsteil 12 begrenzen radial einen Ringraum 18, dessen radiale Breite der radialen Breite der Schulterfläche 8 des Übergangsstückes 5 entspricht. Im Ringraum 18 ist eine Druckfeder 19 untergebracht, die sich mit ihrem

einen Ende an der Schulterfläche 8 und mit ihrem anderen Ende am Flansch 13 des Sicherungsteiles 12 abstützt. Der Ringraum 18 ist von aussen nicht zugänglich, so dass die Druckfeder 19 gegen Verschmutzen und/oder Beschädigung sicher geschützt ist. Der Flansch 13 des Sicherungsteiles 12 dient nicht nur als Führung für das Sicherungsteil bei der Axialverschiebung, sondern auch als Widerlager für die Druckfeder 19. Dadurch sind keine unterschiedlichen Bauteile erforderlich, so dass der konstruktive Aufbau gering gehalten werden kann.

Auf dem Bohrerschaft 2 ist eine Führungshülse 20 angeordnet, die an ihrem dem Anschlussteil 4 zugewandten Ende ein radial nach aussen verlaufendes Flanschstück 21 aufweist. Seine Unterseite 22 bildet eine Auflagefläche, mit der die Führungshülse 20 an einer eine vorgebohrte Bohrung 23 aufweisenden Wand 24 aufliegt. Der Aussenrand 25 des Flanschstückes 21 verläuft parallel zur Bohrerachse und begrenzt radial eine Vertiefung 26 im Flanschstück 21. Der Rand 25 bildet ein Abstützteil, an dem der Bohrer bei der Herstellung einer Hinterschneidung 33 in der Bohrung 23 abgestützt wird. Die radial innen liegende Wandung 27 des Randes 25 bildet hierbei eine Schwenkführung, an der der Bohrer 1 mit einer Gegenführung 28 anliegt. Der Durchmesser der Vertiefung 26 im Flanschstück 21 ist grösser als der Durchmesser des Befestigungsteiles 7.

Die Führungshülse 20 weist etwa in halber Länge innenseitig ein umlaufendes Schwenklager 29 auf, das als radial nach ienenragender Vorsprung ausgebildet ist und dessen Innenwandung 30 auf dem Mantel eines gedachten Kegels liegt, der sich in Richtung auf das Flanschstück 21 öffnet. Die Innenwandung 30 dient bei der kreisenden, umlaufenden Bewegung des Bohrers 1 während der Herstellung der Hinterschneidung 33 zur Abstützung des Bohrers in der Führungshülse. Infolge der kegeliegen Ausbildung wird eine grossflächige Anlage des Bohrerschaftes 2 an der Innenwandung 30 erreicht, so dass nurgeringe Flächenpressungen auftreten. Damit der Bohrer 1 nicht aus der Führungshülse 20 herausgezogen werden kann, ist der Bohrerschaft 2 mit einem Bund 31 versehen, dessen Durchmesser grösser ist als der kleinste Innendurchmesser des Schwenklagers 29. Der Bund 31 liegt im Bereich zwischen dem Schwenklager 29 und dem Bohrkopf 3.

Wenn der Bohrer 1 in die vorgefertigte Bohrung 23 eingeschoben werdens soll, wird das Sicherungsteil 12 in seine Sicherungsstellung gemäss Fig. 1 gebracht. Die Sicherungsstellung wird dadurch erreicht, dass das Sicherungsteil unter der Kraft der Druckfeder 19 mit dem Flansch 13 am Boden 39 der Vertiefung 26 anliegt. Die radiale Breite des Flansches 13 entspricht dem Abstand zwischen dem Befestigungsteil 7 und der Wandung 27 des Aussenrandes 25 des Flanschstückes 21, in Sicherungsstellung gesehen (Fig. 1). Der Flansch 13 liegt dadurch am Befestigungsteil 7 und an der Wandung 27 des Randes 25 sowie am Boden der Vertiefung 26 an. In dieser Lage kann der Bohrer 1 gegenüber der Führungshülse 20 nicht verschwenkt werden, so dass er genau zentriert ist. Wenn daher das Bohrwerkzeug mit der Führungshülse 20 und dem unterhalb von ihr liegenden Bohrkopf 3 in die Bohrung 23 geschoben wird, wird mit Sicherheit ein unbeabsichtigtes Nachfräsen der Bohrung verhindert. Die Führungshülse 20 gewährleistet ein müheloses Einschieben des Bohrers 1. Wenn das Bohrwerkzeug 1 seine in Fig. 1 dargestellte Lage eingenommen hat, wird anschliessend das Sicherungsteil 12 gegen die Kraft der Druckfeder 19 axial auf dem Befestigungsteil 7 und dem Übergangsstück verschoben, wobei der Flansch 13 aus der Vertiefung 26 des Flanschstückes 21 herausgezogen wird. Der Bohrer 1 kann dann in die Fig. 2 dargestellte Arbeitslage verschwenkt werden, in der der Flansch 13 auf der Stirnseite 32 des äusseren Randes 25 des Flanschstückes 21 aufliegt. Vorzugsweise haben der Flansch 13 und der Rand 25 gleiche radiale Breite, so dass der Flansch 13 grossflächig abgestützt werden kann. Die Gegenführung 28 des Bohrers 1, die durch einen Teil der Aussenseite des Befestigungsteiles 7 gebildet wird, liegt dann an der radial inneren Wandung 27 des äusseren Randes 25 an. Die exakte Schräglage des Bohrers 1 in bezug auf die Achse der Führungshülse 20 wird durch das Schwenklager 29 bestimmt, dessen Innenwandung 30 eine Anlagefläche für den Bohrerschaft 2 bildet. Der Bohrer 1 wird nunmehr kreisend bzw. umlaufend bewegt, wobei die Gegenführung 28 stets an der Wandung 27 und der Bohrschaft 2 an der Innenwandung 30 des Schwenklagers 29 anliegt. Dadurch wird mit dem Bohrkopf 3 die Hinterschneidung 33 in der Bohrung 23 hergestellt.

Wenn die Hinterschneidung 33 fertiggestellt ist, wird der Bohrer 1 in seine Ausgangslage zurückgeschwenkt. Da das Sicherungsteil 12 in seiner Freigabestellung gemäss Fig. 2 unter der Kraft der Druckfeder 19 steht, rastet das Sicherungsteil selbsttätig in die Vertiefung 26 des Flanschstückes 21 ein, wenn der Bohrer exakt gegenüber der Führungshülse 20 ausgerichtet ist. Dadurch wird der Bohrer 1 beim Zurückschwenken selbsttätig zentriert. Anschliessend kann das Bohrwerkzeug aus der Bohrung 23 herausgezogen werden, ohne dass die Gefahr besteht, dass der Bohrkopf 3 die Hinterschneidung 23 beschädigt oder unbrauchbar macht.

Während der Herstellung der Hinterschneidung 33 steht der gesamte Bohrer 1 und damit auch der Bohrkopf 3 unter der Kraft der vorgespannten Druckfeder 19, so dass der Bohrer 1 zuverlässig gehandhabt werden kann. Das Sicherungsteil 1 weist an seiner Aussenseite eine Riffelung 34 auf, um seine Handhabung zu erleichtern.

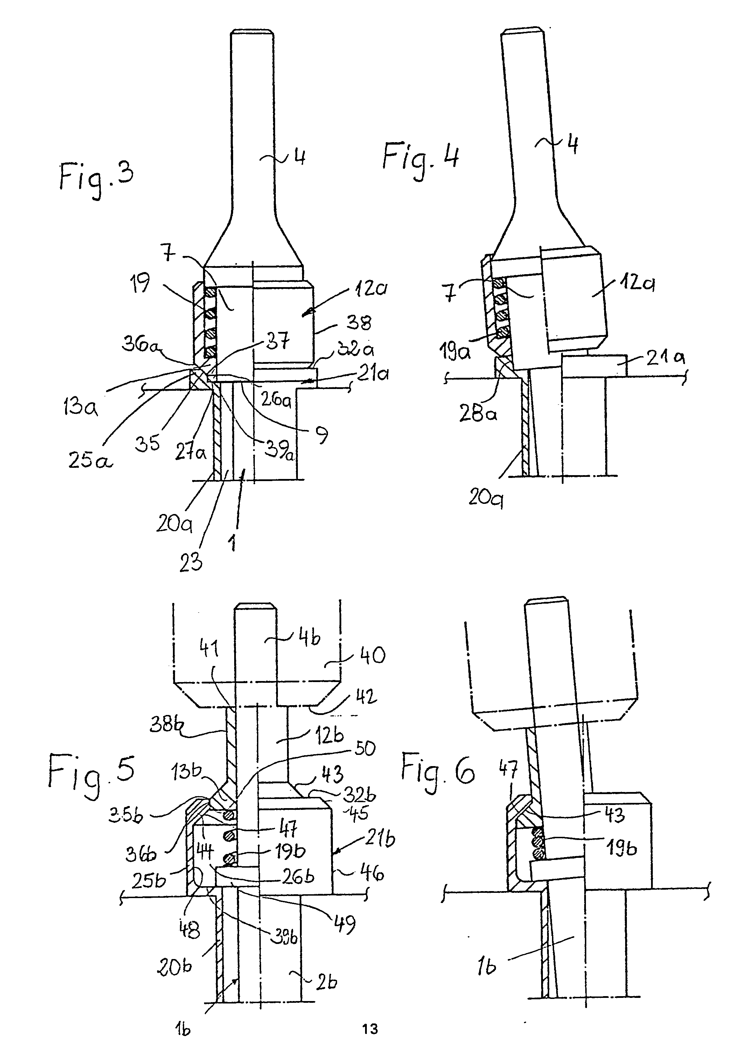

Während bei der Ausführungsform nach den Fig. 1 und 2 die Wandung 27 des Randes 25 axial verläuft, ist die Anschlagfläche 35 für den Flansch 13a des Sicherungsteiles 12a der Ausführungsform gemäss den Fig. 3 und 4 auf dem Mantel eines gedachten Kegels vorgesehen. Die Anschlagfläche 35 verbindet die Stirnseite 32a mit der radial innen liegenden Wandung 27a des Flanschstückes 21a. Der Flansch 13a des Sicherungsteiles 12a hat ebenfalls eine den Mantel eines gedachten Kegels bildende Anlagefläche 36, die am Übergang von der dem Flanschstück 21a zugewandten Stirnseite 37 zur zylindrischen Mantelfläche 38 des Sicherungsteiles vorgesehen ist. In der Sicherungsstellung gemäss Fig. 3 liegen die beiden Flächen 35, 36a unter der Kraft der Druckfeder 19 aneinander. Die Stirnseite 37 des Flansches 13a hat Abstand vom Boden 39a der Vertiefung 26a. Damit der Bohrer 1 dennoch sicher gegenüber der Führungshülse 20a zentriert ist, sitzt das Befestigungsteil 7 mit seiner Stirnseite 9 auf dem Boden 39 der Vertiefung 26a auf. Entsprechend der vorherigen Ausführungsform ist der Durchmesser des Befestigungsteiles 7 geringfügig grösser als die lichte Weite der Führungshülse 20a, so dass das Befestigungsteil mit seinem Randbereich auf dem Boden der Vertiefung abgestützt wird (Fig. 1 und 3). Das Bohrwerkzeug ist im übrigen gleich ausgebildet wie bei der Ausführungsform gemäss den Fig. 1 und 2.

In der Sicherstellung gemäss Fig. 3 kann der Bohrer 1 genau zentriert in die Bohrung 23 geschoben werden. Im Gegensatz zur vorigen Ausführungsform muss das Sicherungsteil 12a nicht manuell in seine Freigabestellung verschoben werden. Wegen der konischen Flächen 35, 36a wird das Sicherungsteil 12a beim Verschwenken des Bohrers 1 selbsttätig gegen die Kraft der Feder 19a in Richtung auf das Anschlussteil 4 so weit verschoben, bis die beiden Anlageflächen 35, 36a voneinander freikommen und der Flansch 13a auf die Stirnseite 32a des Flanschstückes 21a geschoben werden kann (Fig. 4). Der Bohrer 1 wird hierbei so weit verschwenkt, bis die Gegenführung 28a des Befestigungsteiles 7 an der Wandung 27a des Randes 25a anliegt. Anschliessend wird an der anhand der Fig. 2 und 3 beschriebenen Weise der Bohrer längs des Randes 25a kreisend bewegt und die Hinterschneidung 33 in der Bohrung 23 hergestellt. Nach Fertigstellung der Hinterschneidung 33 wird der Bohrer 1 wieder in seine zentrale Lage zurückgeschwenkt. Sobald die Sicherungsstellung gemäss Fig. 3 erreicht ist, gelangt das Sicherungsteil 12a unter der Kraft der Druckfeder 19 in seine Sicherungsstellung, in der die beiden konischen Anlageflächen 35, 36 aneinanderliegen. Infolge der konischen Anlageflächen wird der Bohrer selbsttätig in seine Zentrierstellung gezogen. Die quer zur Achse des Bohrerschaftes 2 liegenden Anlageflächen verhindern, dass der Bohrer 1 beim Einschieben bzw. Herausziehen relativ zur Führungshülse 20a verschwenkt wird. Dadurch ist sichergestellt, dass der Bohrkopf nicht mit der Hinterschneidung bzw. dem Bohrloch beim Einschieben und Herausziehen in Berührung kommt.

Bei der Ausführungsform gemäss den Fig. 5 und 6 sitzt das Sicherungsteil 12b unmittelbar auf dem Anschlussstück 4b des Bohrers 1b. Das Anschlussteil 4b ist in einer schematisch dargestellten Antriebsmaschine 40 drehfest befestigt. Das Sicherungsteil 12b liegt mit seiner einen Stirnseite 41 an einer Stirnseite 42 der Antriebsmaschine 40 an. Am gegenüberliegenden Ende ist das Sicherungsteil 12b mit einem Flansch 13b versehen, der radial nach aussen verläuft und durch eine Verdickung des Sicherungsteiles gebildet wird. Der Flansch 13b hat eine konische Aussenfläche 43, die die zylindrische Mantelfläche 38b des Sicherungsteiles 12b mit einer zylindrischen Mantelfläche 36b verbindet. Sie dient als Anlagefläche, mit der das Sicherungsteil 2b in Sicherungsstellung an einer zylindrischen Anschlagfläche 35b des Flanschstückes 21b anliegt. Der Rand 25b des Flanschstückes 21b ist wesentlich länger als bei den zuvor beschriebenen Ausführungsformen. Das der Antriebsmaschine 40 zugewandte Ende 44 des Randes 25b ist flanschförmig ausgebildet und ragt etwa radial nach innen. Die Anschlagfläche 35b liegt koaxial zur Achse der Führungshülse 20b und geht rechtwinklig in die Stirnseite 32b des Flanschstückes 21b über. Die Stirnseite 32b ist über eine konische Zwischenfläche 45 mit der zylindrischen Aussenfläche 46 des Flanschstückes 41b bzw. des Randes 25b verbunden. Die Anschlagfläche 35b geht in eine innere Kegelmantelfläche 47 über, die an eine zylindrische Innenmantelfläche 48 des Flanschstückes 21b bzw. des Randes 25b anschliesst. Die innere Kegelmantelfläche 47 ist wesentlich länger als die äussere Kegelmantelfläche 45. Der Rand 25b begrenzt radial die Vertiefung 26b, auf deren Boden 39b ein Bund 49 des Bohrerschaftes 2b aufliegt. Der Bund 49 dient als Widerlager für das eine Ende der Druckfeder 19b, die sich mit ihrem anderen Ende an der Stirnseite 50 des Sicherungsteiles 12b abstützt.

Der Flansch 13b hat im Bereich seiner zylindrischen Anlagefläche 36b grösseren Durchmesser als der Bund 49.

In der Sicherungsstellung liegt das Sicherungsteil 12b mit seiner zylindrischen Anlagefläche 36b an der zylindrischen Anschlagfläche 35b des Flanschstückes 21b an. Beide Flächen haben vorteilhafterweise gleiche axiale Länge, so dass eine ganzflächige Abstützung des Sicherungsteiles am Flanschstück 21b gewährleistet ist. Ausserdem liegt der Bund 49 auf dem Boden 39b der Vertiefung 26b auf. Infolge der aneinanderliegenden Anlageflächen 35b, 36b kann der Bohrer 1b nicht gegenüber der Führungshülse 20b verschwenkt werden, so dass der Bohrkopf beim Einschieben in die Bohrung bzw. beim Herausziehen nicht mit der Bohrlochwandung bzw. der Hinterschneidung in Berührung kommt.

Um die Lagesicherung des Bohrers 1b in bezug auf die Führungshülse 20b aufzuheben, ist es lediglich notwendig, die Antriebsmaschine 40 in Richtung auf das Flanschstück 41b gegen die Kraft der Druckfeder 19b zu drücken. Die beiden Anlageflächen 35b, 36b gelangen dann ausser Eingriff miteinander, so dass der Bohrer 1 gegenüber der Führungshülse 20b verschwenkt werden kann (Fig. 6). In dieser verschwenkten Lage liegt das Sicherungsteil 12b mit seiner Kegelmantelfläche 43 an der inneren Kegelmantelfläche 47 am Ende 44 des Flanschstückes 21b an. Die Druckfeder 19b drückt in dieser Lage die beiden Kegelmantelflächen 47, 43 fest aneinander, so dass der

Bohrer 1b bei der Herstellung der Hinterschneidung 33 zuverlässig kreisend bewegt werden kann. Die Kegelmantelfläche 47 des Flanschstückes 21b dient somit als Schwenkführung für den Bohrer, während die Kegelmantelfläche 43 des Sicherungsteiles 12b die Gegenführung des Bohrers bildet. Da diese beiden aneinanderliegenden Flächen verhältnismässig breit sind, kann der Bohrer sehr sicher abgestützt und geführt werden. Sobald die Hinterschneidung hergestellt ist, wird der Bohrer 1b in seine zentrische Lage zurückgeschwenkt. Infolge der aneinanderliegenden Kegelmantelflächen 43, 47 gelangt das Sicherungsteil 12b unter der Kraft der Druckfeder 19b selbsttätig in seine in Fig. 5 dargestellte Sicherungsstellung, in der der Bohrer gegen Verschwenken gegenüber der Führungshülse 20b gesichert ist. Damit der Bohrer 1b nicht unter der Kraft der Druckfeder 19b so weit verschoben wird, dass er mit seinem Sicherungsteil vollständig aus dem Flanschstück 21b herausgedrückt wird, ist der Bund 31 (Fig. 1) des Bohrers derart vorgesehen, dass er in Sicherungsstellung gemäss Fig. 5 an der dem Bohrkopf zugewandten Seite am Schwenklager 29 anliegt. Auch bei den zuvor beschriebenen Ausführungsformen nach den Fig. 1 bis 4 liegt der Bund 31 jeweils am Schwenklager 29 an, wenn der Bohrer durch das Sicherungsteil 12, 12a gesichert ist. Dadurch wird jeweils sichergestellt, dass der Bohrer nicht zu weit gegenüber dem Sicherungsteil verschoben wird.

Bei sämtlichen Ausführungsformen bilden der Bohrer, das Sicherungsteil und die Führungshülse eine Bohreinheit. Die Führungshülse 20 stützt sich mit ihrem Flanschstück an der die Bohrung aufweisenden Wandung ab und liegt an der Bohrungswandung an. Dadurch wird verhindert, dass die Bohrungswandung, insbesondere der Austrittsbereich der Bohrung in die Wand, beschädigt wird. Die Bohrung wird dadurch bei der Herstellung der Hinterschneidung 33 nicht beschädigt, so dass sich mit dem Bohrwerkzeug saubere Bohrungen und Hinterschneidungen herstellen lassen.

**Patentansprüche**

1. Bohrwerkzeug zur Herstellung von hinterschnittenen Bohrungen, mit einem Bohrer (1), der einen Schaft (2, 4) zur Aufnahme in einer Antriebsmaschine (40) und einen Bohrkopf (3) aufweist, mit einer auf dem Schaft gelagerten Führungshülse, mit wenigstens einem Abstützteil (25), das eine Schwenkführung (27) für den Bohrer aufweist, an der der Bohrer mit einer Gegenführung (28) anliegt, und mit einem Schwenklager (29) für den Bohrer, dadurch gekennzeichnet, dass das Bohrwerkzeug mindestens ein Zentriersicherungsteil (12) aufweist, das eine Anlagefläche aufweist, für die wenigstens eine quer zur Schwenkrichtung des Bohrers (1) liegende Anschlagfläche (27) vorgesehen ist.

2. Bohrwerkzeug nach Anspruch 1, dadurch gekennzeichnet, dass die Anlagefläche (26, 36b) eine Zylindermantelfläche des Zentriersicherungsteiles (12, 12b) ist.

3. Bohrwerkzeug nach Anspruch 1, dadurch gekennzeichnet, dass die Anlagefläche (36a) eine Kegelmantelfläche des Zentriersicherungsteiles (12a) ist.

4. Bohrwerkzeug nach einem der Ansprüche 1 bis 3, dadurch gekennzeichnet, dass die Anschlagfläche (27) an der Führungshülse (20) vorgesehen ist.

5. Bohrwerkzeug nach einem der Ansprüche 1 bis 4, dadurch gekennzeichnet, dass das Zentriersicherungsteil (12) eine auf dem Bohrer (1) axial verschiebbare Hülse ist.

6. Bohrwerkzeug nach einem der Ansprüche 1 bis 5, dadurch gekennzeichnet, dass das Zentriersicherungsteil (12) einen radial nach innen gerichteten Flansch (13) aufweist, der am Bohrer (1) anliegt.

7. Bohrwerkzeug nach Anspruch 6, dadurch gekennzeichnet, dass der Flansch (13) ein Befestigungsteil (7) des Bohrers (1) umgibt und an ihm anliegt.

8. Bohrwerkzeug nach Anspruch 6 oder 7, dadurch gekennzeichnet, dass der Flansch (13) an dem den Bohrkopf (3) zugewandten Ende des Zentriersicherungsteiles (12) vorgesehen ist.

9. Bohrwerkzeug nach einem der Ansprüche 6 bis 8, dadurch gekennzeichnet, dass das Zentriersicherungsteil (12) bis auf seinen Flansch (13) Abstand vom Befestigungsteil (7) hat.

10. Bohrwerkzeug nach einem der Ansprüche 6 bis 9, dadurch gekennzeichnet, dass das Zentriersicherungsteil (12) an seinem vom Flansch (13) abgewandten Ende (14) axial über das Befestigungsteil (7) ragt.

11. Bohrwerkzeug nach Anspruch 10, dadurch gekennzeichnet, dass das axial überstehende Ende (14) des Zentriersicherungsteiles (12) an einem gegenüber dem Befestigungsteil (7) im Aussendurchmesser grösseren Schaftabschnitt (5) anliegt.

12. Bohrwerkzeug nach einem der Ansprüche 7 bis 11, dadurch gekennzeichnet, dass das Zentriersicherungsteil (12) und das Befestigungsteil (7) einen Aufnahmeraum (18) für mindestens eine Druckfeder (19) radial begrenzen.

13. Bohrwerkzeug nach Anspruch 12, dadurch gekennzeichnet, dass sich die Druckfeder (19) mit ihrem einen Ende am Flansch (13) des Zentriersicherungsteiles (12) und mit ihrem anderen Ende am Schaftabschnitt (5) abstützt.

14. Bohrwerkzeug nach einem der Ansprüche 1 bis 13, dadurch gekennzeichnet, dass die Anschlagfläche (27) an einem Rand (25) eines Flanschstückes (21) der Führungshülse (20) vorgesehen ist.

15. Bohrwerkzeug nach Anspruch 14, dadurch gekennzeichnet, dass der Rand (25) zumindest annähernd parallel zur Achse der Führungshülse (20), vorzugsweise koaxial zu ihr verläuft.

16. Bohrwerkzeug nach einem der Ansprüche 1 bis 15, dadurch gekennzeichnet, dass die Anlagefläche (36) die Aussenseite des Flansches (13) des Zentriersicherungsteiles (12) ist.

17. Bohrwerkzeug nach einem der Ansprüche 1 bis 16, dadurch gekennzeichnet, dass das Befestigungsteil (7) die Gegenführung (28) des Bohrers (1) aufweist.

18. Bohrwerkzeug nach Anspruch 17, dadurch gekennzeichnet, dass die Gegenführung (28) die Aussenseite des Befestigungsteiles (7) ist.

19. Bohrwerkzeug nach einem der Ansprüche 14 bis 18, dadurch gekennzeichnet, dass der Rand (25) des Flanschstückes (21) das Abstützteil für den Bohrer (1) ist.

20. Bohrwerkzeug nach einem der Ansprüche 1 bis 19, dadurch gekennzeichnet, dass die Anschlagfläche (27) die Schwenkführung für den Bohrer (1) ist.

21. Bohrwerkzeug nach einem der Ansprüche 1 bis 20, dadurch gekennzeichnet, dass die Anschlagfläche (35a, 35b) eine Kegelmantelfläche ist.

22. Bohrwerkzeug nach Anspruch 21, dadurch gekennzeichnet, dass die Kegelmantelfläche (35a) eine Abschrägung der von einer Stirnseite (32a) und einer inneren Wandung (27a) gebildeten umlaufenden Kante des Randes (25a) des Flanschstückes (21a) ist.

23. Bohrwerkzeug nach einem der Ansprüche 1 bis 22, dadurch gekennzeichnet, dass das Zentriersicherungsteil (12b) über seine ganze axiale Länge auf einem Anschlussteil (4b) des Bohrers (1b) sitzt.

24. Bohrwerkzeug nach Anspruch 23, dadurch gekennzeichnet, dass die Anlagefläche (36b) an dem den Bohrkopf (3) zugewandten Ende (13b) des Zentriersicherungsteiles (12b) vorgesehen ist.

25. Bohrwerkzeug nach Anspruch 23 oder 24, dadurch gekennzeichnet, dass das dem Bohrkopf (3) zugewandte Ende (13b) des Zentriersicherungsteiles (12b) flanschartig nach aussen verläuft, vorzugsweise eine Verdickung des Sicherungsteiles ist.

26. Bohrwerkzeug nach einem der Ansprüche 23 bis 25, dadurch gekennzeichnet, dass die Druckfeder (19b) am flanschartigen Ende (13b) des Zentriersicherungsteiles (12b) und an einem Bund (49) des Bohrerschaftes (2b) abgestützt ist.

27. Bohrwerkzeug nach einem der Ansprüche 7 bis 26, dadurch gekennzeichnet, dass das Befestigungsteil (7) und/oder der Bund (49) auf einem Boden (39, 39b) einer Vertiefung (26, 26a, 26b) des Flanschstückes (21, 21a, 21b) der Führungshülse (20, 20a, 20b) in Sicherungsstellung des Zentriersicherungsteiles (12, 12a, 12b) aufliegen, vorzugsweise unter der Kraft der Druckfeder (19, 19a, 19b).

28. Bohrwerkzeug nach einem der Ansprüche 23 bis 27, dadurch gekennzeichnet, dass an die Anschlagfläche (35b) in Richtung auf den Bohrkopf (3) eine Kegelmantelfläche (47) anschliesst.

29. Bohrwerkzeug nach Anspruch 28, dadurch gekennzeichnet, dass die Kegelmantelfläche (47) an der Innenseite des Randes (25b) des Flanschstückes (21b) vorgesehen ist.

30. Bohrwerkzeug nach einem der Ansprüche 1 bis 29, dadurch gekennzeichnet, dass der Abstand zwischen dem Boden (39) der Vertiefung (26) des Flanschstückes (21) und dem Schwenklager (29) wenigstens etwa gleich dem Abstand zwischen der dem Bohrkopf (3) zugewandten Stirnseite (9) des Befestigungsteiles (7) und einem Bund (31) des Bohrerschaftes (2) ist.

31. Bohrwerkzeug nach einem der Ansprüche 1 bis 30, dadurch gekennzeichnet, dass das Schwenklager (29) ein umlaufender, an der Innenwandung der Führungshülse (20) vorgesehener Vorsprung ist, der eine umlaufende, den Schwenkwinkel des Bohrers (1) gegenüber der Führungshülse (20) bestimmende Abstützfläche (20) aufweist.

## Claims

1. Boring tool for making undercut bores, with a drill (1) exhibiting a shank (2, 4) for being held in a driving machine (40) as well as a boring head (3), with a guide sleeve held on the shank, with at least one supporting part (25) exhibiting swivel guide (27) for the drill, said swivel guide (27) being engaged by a counterguide (28) of the drill, and with a swivel bearing (29) for the drill, characterized in that the boring tool exhibits at least one centering/locking part (12) which exhibits a stop face for which is provided at least one stop face (27) situated transversely to the swivelling direction of the drill (1).

2. Boring tool according to Claim 1, characterized in that the stop face (26, 36b) is a lateral cylindrical surface of the centering/locking part (12, 12b).

3. Boring tool according to Claim 1, characterized in that the stop face (36a) is a lateral conical surface of the centering/locking part (12a).

4. Boring tool according to any one of Claims 1 to 3, characterized in that the stop face (27) is provided on the guide sleeve (20).

5. Boring tool according to any one of Claims 1 to 4, characterized in that the centering/locking part (12) is a sleeve which is axially displaceable on the drill (1).

6. Boring tool according to any one of Claims 1 to 5, characterized in that the centering/locking part (12) exhibits a radially inward-directed flange (13) which is in contact with the drill (1).

7. Boring tool according to Claim 6, characterized in that the flange (13) surrounds and is in contact with a mounting part (7) of the drill (1).

8. Boring tool according to Claim 6 or 7, characterized in that the flange (13) is provided at the end of the centering/locking part (12) facing the boring head (3).

9. Boring tool according to any one of Claims 6 to 8, characterized in that, with the exception of its flange (13), the centering/locking part (12) is at a distance from the mounting part (7).

10. Boring tool according to any one of Claims 6 to 9, characterized in that at its end (14) facing away from the flange (13) the centering/locking part (12) projects axially over the mounting part (7).

11. Boring tool according to Claim 10, characterized in that the axially projecting end (14) of the centering/locking part (12) is in contact with a shank section (5) whose outside diameter is greater than that of the mounting part (7).

12. Boring tool according to any one of Claims 7 to 11, characterized in that the centering/locking part (12) and the mounting part (7) radially limit an installation space (18) for at least one compression spring (19).

13. Boring tool according to Claim 12, characterized in that the compression spring (19) is supported by one end on the flange (13) of the centering/locking part (12) and by its other end on the shank section (5).

14. Boring tool according to any one of Claims 1 to 13, characterized in that the stop face (27) is provided on a lip (25) of a flange piece (21) of the guide sleeve (20).

15. Boring tool according to Claim 14, characterized in that the lip (25) extends at least approximately parallel to the axis of the guide sleeve (20), preferably coaxially to the latter.

16. Boring tool according to any one of Claims 1 to 15, characterized in that the stop face (36) is the outside of the flange (13) of the centering/locking part (12).

17. Boring tool according to any one of Claims 1 to 6, characterized in that the mounting part (7) exhibits the counterguide (28) of the drill (1).

18. Boring tool according to Claim 17, characterized in that the counterguide (28) is the outside of the mounting part (7).

19. Boring tool according to any one of Claims 14 to 18, characterized in that the lip (25) of the flange piece (21) is the supporting part for the drill (1).

20. Boring tool according to any one of Claims 1 to 19, characterized in that the stop face (27) is the swivel guide for the drill (1).

21. Boring tool according to any one of Claims 1 to 20, characterized in that the stop face (35a, 35b) is a lateral conical surface.

22. Boring tool according to Claim 21, characterized in that the lateral conical surface (35a) is a chamfer of the continuous edge of the lip (25a) of the flange piece (21a), said edge being formed by an end face (32a) and an inner wall (27a).

23. Boring tool according to any one of Claims 1 to 22, characterized in that the centering/locking part (12b) is seated over its entire axial length on a connecting part (4b) of the drill (1b).

24. Boring tool according to Claim 23, characterized in that the stop face (36b) is provided on the end (13b) of the centering/locking part (12b) facing the boring head (3).

25. Boring tool according to Claim 23 or 24, characterized in that the end (13b) of the centering/locking part (12b) facing the boring head (3) extends outward in the manner of a flange and is preferably a cross-sectional enlargement of the locking part.

26. Boring tool according to any one of Claims 23 to 25, characterized in that the compression spring (19b) is supported on the flange- like end (13b) of the centering/locking part (12b) and on a collar (49) of the drill shank (2b).

27. Boring tool according to any one of Claims 7 to 26, characterized in that, with the centering/locking part (12, 12a, 12b) in the locking position, the mounting part (7) and/or the collar (49) rest on a base (39, 39b) of a recess (26, 26a, 26b) of the flange piece (21, 21a, 21b) of the guide sleeve (20, 20a, 20b), preferably under the force of the compression spring (19, 19a, 19b).

28. Boring tool according to any one of Claims 23 to 27, characterized in that the stop face (35b) is adjoined in the direction of the boring head (3) by a lateral conical surface (47).

29. Boring tool according to Claim 28, characterized in that the lateral conical surface (47) is provided on the inside of the lip (25b) of the flange piece (21b).

30. Boring tool according to any one of Claims 1 to 29, characterized in that the distance between the base (39) of the recess (26) of the flange piece (21) and the swivel bearing (29) is at least approximately equal to the distance between the end face (9) of the mounting part (7) facing the boring head (3) and a collar (31) of the drill shank (2).

31. Boring tool according to any one of Claims 1 to 30, characterized in that the swivel bearing (29) is a continuous projection which is provided on the inner wall of the guide sleeve (20) and which exhibits a continuous supporting surface (20) determining the swivel angle of the drill (1) in relation to the guide sleeve (20).

## Revendications

1. Outil de forage destiné à la réalisation de perçages à dépouille équipé d'un foret (1) présentant une tige (2, 4) en vue du logement dans une machine d'entraînement (40) et une tête de forage (3) avec une douille de guidage disposée sur la tige, avec au moins une pièce de soutien (25) présentant un guidage oscillant (27) pour le foret, sur laquelle le foret vient en butée sur un contre-guide (28) et avec un palier pivotant (29) pour le foret, caractérisé par le fait que l'outil de forage présente au moins un arrêtoir de centrage (2) présentant à son tour une surface d'appui pour laquelle au moins une surface d'appui (27) perpendiculaire à la direction de basculement du foret (1) est prévue.

2. Outil de forage suivant la revendication 1, caractérisé par le fait que la surface d'appui (26, 36b) est constituée par une surface du manteau cylindrique de l'arrêtoir de centrage ( 12, 12b).

3. Outil de forage suivant la revendication 1, caractérisé par le fait que la surface d'appui (36a) est constituée par une surface du manteau conique de l'arrêtoir de centrage (12a).

4. Outil de forage suivant l'une des revendications 1 à 3, caractérisé par le fait que la surface de butée (27) est prévue sur la douille de guidage (20).

5. Outil de forage suivant l'une des revendications 1 à 4, caractérisé par le fait que l'arrêtoir de centrage (12) est une douille déplaçable axialement sur le foret (1).

6. Outil de forage suivant l'une des revendications 1 à 5, caractérisé par le fait que l'arrêtoir de centrage (12) présente un flasque (13) orienté radialement vers l'intérieur, venant en appui sur le foret (1).

7. Outil de forage suivant la revendication 6, caractérisé par le fait que le flasque (13) entoure une pièce de fixation (7) du foret (1) et vient en appui sur cette dernière.

8. Outil de forage suivant la revendication 6 ou 7, caractérisé par le fait que le flasque (13) est prévu sur l'extrémité de l'arrêtoir de centrage (12) tournée vers la tête de forage (3).

9. Outil de forage suivant l'une des revendications 6 à 8, caractérisé par le fait que l'arrêtoir de centrage (12) présente jusqu'à son flasque (13), un écart par rapport à la pièce de fixation (7).

10. Outil de forage suivant l'une des revendications 6 à 9, caractérisé par le fait que l'extrémité (14) de l'arrêtoir de centrage (12) n'étant pas tournée vers le flasque (13) dépasse axialement au-dessus de la pièce de fixation (7).

11. Outil de forage suivant la revendication 10, caractérisé par le fait que l'extrémité dépassant axialement (14) de l'arrêtoir de centrage (12) vient en appui sur une partie de la tige présentant un plus grand diamètre (5) au-dessus de la pièce de fixation (7).

12. Outil de forage suivant l'une des revendications 7 à 11, caractérisé par le fait que l'arrêtoir de centrage (12) et la pièce de fixation (7) limitent radialement un logement (18) pouvant recevoir au moins un ressort de compression (19).

13. Outil de forage suivant la revendication 12, caractérisé par le fait que l'une des extrémités du ressort de compression (19) vient en appui sur le flasque (13) de l'arrêtoir de centrage (12) et l'autre extrémité sur la section de tige (5).

14. Outil de forage suivant l'une des revendications 1 à 13, caractérisé par le fait que la surface d'appui (27) est prévue sur un bord (25) d'un élément de flasque (21) de la douille de guidage (20).

15. Outil de forage suivant la revendication 14, caractérisé par le fait que le bord (25) est approximativement parallèle à l'axe de la douille de guidage (20) et de préférence coaxial par rapport à cette dernière.

16. Outil de forage suivant l'une des revendications 1 à 15, caractérisé par le fait que la surface d'appui (36) est constituée par la face extérieure du flasque (13) de l'arrêtoir de centrage (12).

17. Outil de forage suivant l'une des revendications 1 à 16, caractérisé par le fait que la pièce de fixation (7) présente le contre-guide (28) du foret (1).

18. Outil de forage suivant la revendication 17, caractérisé par le fait que le contre-guide (28) est constitué par la face extérieure de la pièce de fixation (7).

19. Outil de forage suivant l'une des revendications 14 à 18, caractérisé par le fait que le bord (25) de l'élément de flasque (21) constitue la pièce de butée du foret (1).

20. Outil de forage suivant l'une des revendications 1 à 19, caractérisé par le fait que la surface d'appui (27) est constituée par le guidage pivotant du foret (1).

21. Outil de forage suivant l'une des revendications 1 à 20, caractérisé par le fait que la surface d'appui (35a, 35b) est constituée par une surface du manteau conique.

22. Outil de forage suivant la revendication 21, caractérisé par le fait que la surface du manteau conique (35a) est constituée par un biseau de l'arête du bord (25a) de l'élément de flasque (21a) formée par une face avant (32a) et une paroi intérieure (27a).

23. Outil de forage suivant l'une des revendications 1 à 22, caractérisé par le fait que l'arrêtoir de centrage (12b) est situé sur toute sa longueur axiale sur une pièce connexe (4b) du foret (1b).

24. Outil de forage suivant la revendication 23, caractérisé par le fait que la surface d'appui (36b) est prévue sur l'extrémité (13b) tournée à l'inverse de la tête de forage (3) de l'arrêtoir de centrage (12b).

25. Outil de forage suivant la revendication 23 ou 24, caractérisé par le fait que l'extrémité (13b) de l'arrêtoir de centrage (12b) tournée vers la tête de forage (3) sort vers l'extérieur à la façon d'un flasque et est de préférence un bourrelet de l'arrêtoir.

26. Outil de forage suivant l'une des revendications 23 à 25, caractérisé par le fait que le ressort de compression (19b) vient en appui sur l'extrémité en forme de flasque (13b) de l'arrêtoir de centrage (12b) et sur un collet (49) de la tige du foret (2b).

27. Outil de forage suivant l'une des revendications 7 à 26, caractérisé par le fait que la pièce de fixation (7) et/ou le collet (49) viennent en appui sur un fond (39, 39b) d'une encoche (26, 26a, 26b) de l'élément de flasque (21, 21a, 21b) de la douille de guidage (20, 20a, 20b) en position d'arrêt de l'arrêtoir de centrage (12, 12a, 12b) de préférence sous l'effet de la force du ressort de compression (19, 19a, 19b).

28. Outil de forage suivant l'une des revendications 23 à 27, caractérisé par le fait que la surface d'appui (35) en direction de la tête de forage (3) est raccordée à une surface de manteau conique (47).

29. Outil de forage suivant la revendication 28, caractérisé par le fait que la surface du manteau conique (47) est prévue sur la face intérieure du bord (25b) de l'élément de flasque (21b).

30. Outil de forage suivant l'une des revendications 1 à 29, caractérisé par le fait que la distance entre le fond (39) de l'encoche (26) de l'élément de flasque (21) et le palier pivotant (29) est au moins environ égale à la distance entre la face avant (9) tournée vers la tête de forage (3) de la pièce de fixation (7) et un collet (31) de la tige de forage (2).

31. Outil de forage suivant l'une des revendications 1 à 30, caractérisé par le fait que le palier pivotant (29) est une saillie sur toute la circonférence de la paroi intérieure de la douille de guidage (20) présentant une surface d'appui (20) sur toute la circonférence déterminant l'angle de basculement du foret (1) par rapport à la douille de guidage (20).

Fig.1

Fig.2

Fig.3

Fig.4

Fig.5

Fig.6

13